# EUROPEAN PATENT APPLICATION

(11) **EP 2 868 372 A1**
(43) Date of publication of application: **06.05.2015**
(21) Application number: 13809696.1
(22) Date of filing: 21.05.2013
(51) Int. Cl.: B01J 13/14, A61J 3/07

(54) **METHOD FOR PRODUCING SEAMLESS CAPSULE AND DEVICE FOR PRODUCING SEAMLESS CAPSULE**

(30) Priority: 28.06.2012 JP 2012146004
(71) Applicant: Freund Corporation, Tokyo 169-0072 (JP)
(72) Inventor: OMORI Hiroshi, Tokyo 169-0072 (JP); MORIMOTO Yasuaki, Tokyo 169-0072 (JP)
(74) Representative: Hoffmann Eitle
(86) International application number: PCT/JP2013/064065
(87) International publication number: WO 2014/002649

(57) **Abstract**

The present invention manufactures a seamless capsule (SC) by discharging multilayer liquid droplets 14 from a nozzle 2 into coolant 8 to cause a surface portion of each of the liquid droplets 14 to be cured. There are provided below the nozzle 2 a straight tubular shaped straight forming tube 21 and a rotary forming tube 22 having a diameter larger than that of the straight forming tube 21. A rotary elbow section 24 is rotatably connected to a lower end portion of the straight forming tube 21. Multilayer liquid droplets 14 are discharged into the straight forming tube 21, and after the liquid droplets 14 are cooled inside the straight forming tube 21, the liquid droplets 14 are discharged from the rotary elbow section 24 into the rotary forming tube 22. The liquid droplets 14 are discharged from the rotating rotary elbow section 24 while being rotated. The released liquid droplets 14 fall in a vertical direction while being scattered in a peripheral direction in the rotary forming tube 22 to be cured.

## Description

### Technical Field

The present invention relates to manufacturing technology of a seamless capsule coated with a film including gelatin and the like, more particularly, to a method and a device for manufacturing a seamless capsule produced by cooling and curing a liquid droplet ejected from a nozzle in curing liquid.

### Background Art

Most of seamless capsules used for medicines and the like have been manufactured by a method called a falling-drop method. The falling-drop method is performed using a multiple nozzle. When a double-layered capsule is manufactured, a double nozzle in which a discharge port for capsule core liquid is provided in an inner tube and a discharge port for coating liquid is provided in an outer tube is used. The core liquid and coating liquid are discharged from a leading end of the double nozzle and released into curing liquid. The core liquid and coating liquid discharged into the curing liquid are separated into liquid droplets by vibration applied to the nozzle. The liquid droplets in the curing liquid are each shaped into a sphere by surface tension thereof. Each spherical liquid droplet is cooled in a capsule forming tube in which the curing liquid circulates at a constant speed for coagulation, whereby a spherical seamless capsule is formed.

In order to increase production of the seamless capsule, it is important not only to increase the number of nozzles, but also to increase production thereof per one nozzle. In order to increase the production of the seamless capsule per one nozzle, it is necessary to increase a supply speed of raw material liquid or vibration frequency for separating the liquid droplets and further to increase a supply speed of coolant (curing liquid). However, when the supply speed of the coolant is increased without modifying a device configuration, a time required for the liquid droplet to pass through the capsule forming tube is correspondingly reduced, resulting in insufficient cooling of the liquid droplet. The insufficient cooling of the liquid droplet leads to incomplete gelation, which may cause a defect such as deformation, rupture, or uneven thickness of the capsule, or adhesion between the capsules. In order to increase the production without causing such a defect, it is necessary to secure a cooling time for the liquid droplet to some extent while increasing the supply speed of the coolant.

First, as a method for securing the cooling time while increasing the supply speed of the coolant so as to avoid the above defect, a method that increases a length of the capsule forming tube can be considered. Increase in the length of the capsule forming tube allows a sufficient cooling time to be secured even when the liquid speed is high. Thus, it is possible to suppress occurrence of the defect due to incomplete gelation while increasing the production. Further, as a countermeasure against occurrence of the defect, a method as disclosed in Patent Document 1 wherein the liquid droplet is made to fall in a spiral manner along the tube can be considered. According to the method of Patent Document 1, it is possible to increase a length of a movement path of the liquid droplet without increasing the length of the capsule forming tube. This increase in the movement distance allows a long cooling time to be secured.

### Citation List

### Patent Document

Patent Document 1: Japanese Patent No. 3,159,724

### Disclosure of the Invention

### Problems to be Solved by the Invention

However, when the length of the capsule forming tube is increased as described above, the device size disadvantageously increases. On the other hand, according to the method of Patent Document 1, the production of the seamless capsule can be increased to some extent without causing an increase in the device size. However, the spiral movement may cause deformation or uneven thickness of the liquid droplet, resulting in increase in occurrence frequency of a defective capsule.

The liquid droplet, being a base material of the seamless capsule, is gelled with cooling. Thus, the liquid droplet is preferably slowly cooled for a while after being separately released from the nozzle and it is recommended to avoid an abrupt speed change or horizontal movement. However, in a device of Patent Document 1, the liquid droplet discharged from the nozzle spirally falls immediately after the discharge or subjected to an abrupt change in movement direction by a severely bent elbow. This may cause deformation or uneven thickness of the liquid droplet before curing of the liquid droplet. Further, the coolant eddies at a large-diameter portion of the capsule forming tube, so that when uncured liquid droplet immediately after the discharge is sucked into the eddy, an impact is applied to the liquid droplet. This may cause deformation or uneven thickness of the capsule.

### Means for Solving the Problems

A seamless capsule manufacturing method according to the present invention is a method that manufactures a seamless capsule by discharging a liquid droplet from a nozzle into curing liquid to cause at least a surface portion of each of the liquid droplets to be cured. The method includes: discharging the liquid droplets in a straight tubular shaped first forming tube disposed below the nozzle and extending in a vertical direction to make the liquid droplets fall in the curing liquid in the first forming tube for cooling; discharging the liquid droplets from a rotary discharge device rotatably connected to a lower end of the forming tube , while rotating the rotary discharge device, into a second forming tube having a diameter larger than that of the forming tube ; and making the liquid droplets fall in the curing liquid in the second forming tube in the vertical direction while scattering the liquid droplets in a peripheral direction.

In the present invention, first the liquid droplet is cured to some extent in the straight tubular shaped first forming tube. Thereafter, the liquid droplets are scattered in the large- diameter second forming tube to make the liquid droplets slowly fall in the second forming tube. Thus, it is possible to allow the liquid droplets to be cooled and cured in a gentle manner without using a long capsule forming tube or making the liquid droplets fall in a spiral manner and thereby to manufacture a high quality seamless capsule while suppressing occurrence of deformation, uneven thickness, or rapture of the capsule. This leads to improvement in productivity of the seamless capsule.

In the seamless capsule manufacturing method, the rotary discharge device may be provided so as to be bent such that a bent angle Ea thereof with respect to the first forming tube is obtuse, preferably, 120° to 160°, and the liquid droplets may be discharged near a peripheral wall of the second forming tube from a leading end of the rotary discharge device. Further, a ratio (Sd/Ed) between an inner diameter Sd of the first forming tube and an inner diameter Ed of the outlet of the rotary discharge device may be 0.8 to 1.2, and the liquid droplets may be discharged from the rotary discharge device at substantially the same speed as a falling speed of the liquid droplets in the first forming tube. Further, the rotary discharge device may be driven into rotation at a rotating speed of 5 rpm to 50 rpm, and the liquid droplets may be discharged straight down from the rotary discharge device and then fall in the vertical direction.

A seamless capsule manufacturing device according to the present invention is a device that manufactures a seamless capsule by discharging a liquid droplet from a nozzle into curing liquid to cause at least a surface portion of each of the liquid droplets to be cured. The device includes: a straight tubular shaped first forming tube disposed below the nozzle to receive the discharged liquid droplets; a rotary discharge device rotatably connected to a lower end of the first forming tube; and a second forming tube disposed below the first forming tube and having a diameter larger than that of the first forming tube, into which the liquid droplets are discharged from the rotary discharge device, wherein the liquid droplets cooled in the first forming tube are discharged into the second forming tube with the rotary discharge device rotated and then the liquid droplets fall in a vertical direction in the curing liquid in the second forming tube while being scattering in a peripheral direction.

In the present invention, the seamless capsule manufacturing device includes the straight tubular shaped first forming tube, rotary discharge device, and second forming tube. The liquid droplets cooled in the first forming tube are discharged into the second forming tube with the rotary discharge device rotated. Then, the liquid droplets are made to fall in the vertical direction in the cooling liquid in the second forming tube while being scattered in the peripheral direction. The liquid droplets are cured to some extent in the first forming tube, then scattered in the large diameter second forming tube by the rotary discharge device, and fall slowly in the second forming tube. Thus, it is possible to allow the liquid droplets to be cooled and cured in a gentle manner without using a long capsule forming tube or making the liquid droplets fall in a spiral manner and thereby to manufacture a high quality seamless capsule while suppressing occurrence of deformation, uneven thickness, or rapture of the capsule. This leads to improvement in productivity of the seamless capsule.

In the seamless capsule manufacturing method, a ratio Rd/Sd between an inner diameter Sd of the first forming tube and an inner diameter Rd of the second forming tube may be 4.0 to 10.0. Further, the second forming tube may include a cylindrical portion having a fixed inner diameter and a tapered portion provided below the cylindrical portion and reduced in inner diameter along its axial direction, and a ratio RL/Rd between a length RL between the lower end of the rotary discharge device and upper end of the tapered portion and inner diameter Rd of the cylindrical portion may be 1.0 to 2.5.

Further, a bent angle Ea of the rotary discharge device may be obtuse, preferably 120° to 160°. Further, a length SL of a straight part of the first forming tube may be 800 mm to 2, 000 mm. In addition, a ratio (Sd/Ed) between an inner diameter Sd of the first forming tube and an inner diameter Ed of the outlet of the rotary discharge device may be 0.8 to 1.2.

### Advantages of the Invention

According to the seamless capsule manufacturing method of the present invention, the liquid droplets are discharged into the straight tubular shaped first forming tube to make the liquid droplets fall in the curing liquid in the first forming tube for cooling. Then the liquid droplets are discharged from the rotary discharge device rotatably connected to the lower end of the capsule forming tube, with the rotary discharge device rotated, into the second forming tube. Finally, the liquid droplets are made to fall in the curing liquid in the second forming tube in the vertical direction while being scattered in the peripheral direction. Thus, it is possible to allow the liquid droplets to be cooled and cured in a gentle manner and thereby to manufacture a high quality seamless capsule while suppressing occurrence of deformation, uneven thickness, or rapture of the capsule.

According to the seamless capsule manufacturing device of the present invention, the straight tubular shaped first forming tube, rotary discharge device, and second forming tube are provided in the seamless capsule manufacturing device. The liquid droplets cooled in the first forming tube are discharged into the second forming tube with the rotary discharge device rotated. Then, the liquid droplets are made to fall in the vertical direction in the cooling liquid in the second forming tube while being scattered in the peripheral direction. This allows the liquid droplets cured to some extent in the first forming tube to fall slowly in the second forming tube for curing. Thus, it is possible to allow the liquid droplets to be cooled and cured in a gentle manner and thereby to manufacture a high quality seamless capsule while suppressing occurrence of deformation, uneven thickness, or rapture of the capsule.

### Brief Description of the Drawings

FIG. 1 is an explanatory view illustrating a configuration of a seamless capsule manufacturing device which is an embodiment of the present invention.
FIG. 2 is an explanatory view illustrating a configuration of a rotary elbow section in the seamless capsule manufacturing device of Fig. 1.

### Best Mode for Carrying Out the Invention

Hereinafter, an embodiment of the present invention will be described in detail with reference to the drawings. An object of the present embodiment is to provide a seamless capsule manufacturing method and a seamless capsule manufacturing device capable of increasing the production of the seamless capsule without causing an increase in the device size and suppressing occurrence of a defect such as deformation or uneven thickness.

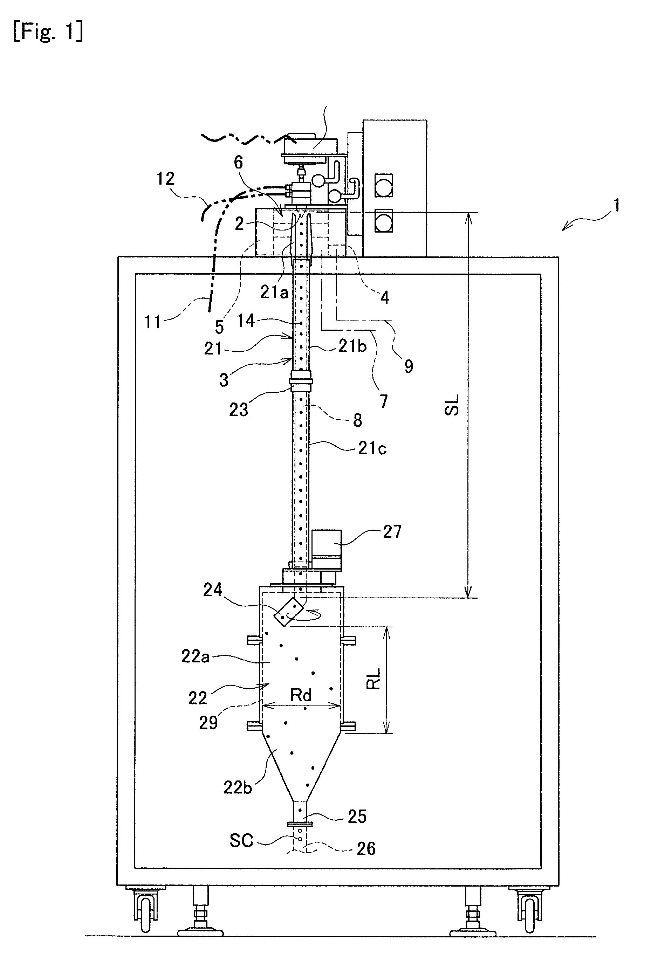

FIG. 1 is an explanatory view illustrating a configuration of a seamless capsule manufacturing device 1 which is an embodiment of the present invention. The seamless capsule manufacturing method according to the present invention is implemented by the device illustrated in FIG. 1. The seamless capsule manufacturing device 1 is an in-liquid nozzle type device provided with a multiple-structure nozzle. The seamless capsule manufacturing device 1 manufactures a seamless capsule SC by discharging a liquid droplet from a multiple nozzle 2 (hereinafter, abbreviated as "nozzle 2") into a capsule forming tube 3.

As illustrated in FIG. 1, a leading end portion of the nozzle 2 is inserted into an upper end portion of the capsule forming tube 3 and installed therein. The upper end portion of the capsule forming tube 3 constitutes, together with a coolant supply tube 4 and an overflow tube 5, a coolant inflow portion 6. The coolant inflow portion 6 has a triple tube structure in which the above three tubes 3, 4, and 5 are concentrically arranged. By a not illustrated pump, coolant (curing liquid) 8 is supplied to the coolant supply tube 4 through a tube line 7. The capsule forming tube 3 is provided inside the coolant supply tube 4. The coolant 8 flows in the coolant supply tube 4 from the capsule forming tube 3. The overflow tube 5 is provided outside the coolant supply tube 4. Surplus coolant 8 is discharged as needed from the overflow tube 5 to be returned to a not illustrated coolant tank through a return tube 9.

The leading end portion of the nozzle 2 is sunk into the coolant 8 during capsule formation processing. From the nozzle 2, core liquid (inner layer liquid) and coating liquid (outer layer liquid) are discharged in a two-layer state into the coolant 8. The core liquid is reserved in a not illustrated core liquid tank and is pressure-supplied to the nozzle 2 through a core liquid supply tube 11. Like the core liquid, the coating liquid is reserved in a not illustrated coating liquid tank and is pressure-supplied to the nozzle 2 through a coating liquid supply tube 12. Vibration is applied to the nozzle 2 by a vibrator 13. The two-layer liquid discharged from the nozzle 2 into the coolant 8 is appropriately cut by the vibration applied from the vibrator 13. A multilayer liquid droplet 14 (hereinafter, abbreviated as "liquid droplet 14" as needed) in which the entire periphery of the core liquid is covered by the coating liquid is formed in the capsule forming tube 3. The liquid droplet 14 is cooled and cured by the coolant 8 in the capsule forming tube 3, whereby a spherical seamless capsule SC is formed.

In the seamless capsule manufacturing device 1, the capsule forming tube 3 is constituted by a small-diameter straight forming tube (first forming tube) 21 and a large-diameter rotary forming tube (second forming tube) 22. The straight forming tube 21 is formed into a straight tubular shape and extends vertically downward. The rotary forming tube 22 is disposed below the straight forming tube 21. The rotary forming tube 22 is formed into an erected cylindrical shape having a diameter larger than that of the straight forming tube 21.

The straight forming tube 21 is constituted by an introduction tube 21a and extension tubes 21b and 21c. The nozzle 2 is inserted into an upper end portion of the introduction tube 21a. The liquid droplet is discharged into the introduction tube 21a from the nozzle 2. The extension tube 21b is connected to a lower portion of the introduction tube 21a and extends downward. The extension tube 21c is connected to a lower portion of the extension tube 21b through a connection portion 23 and extends downward. A rotary elbow section (rotary discharge device) 24 formed so as to be bent in a dog-leg shape is connected to a leading end portion of the extension tube 21c. In the seamless capsule manufacturing device 1, a length SL of a straight part of the capsule forming tube 3 is 800 mm to 2,000 mm (preferably, 1,000 mm to 1,800 mm).

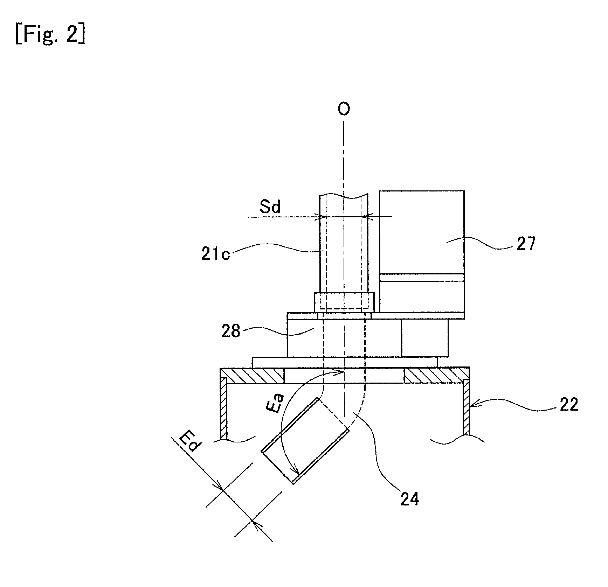

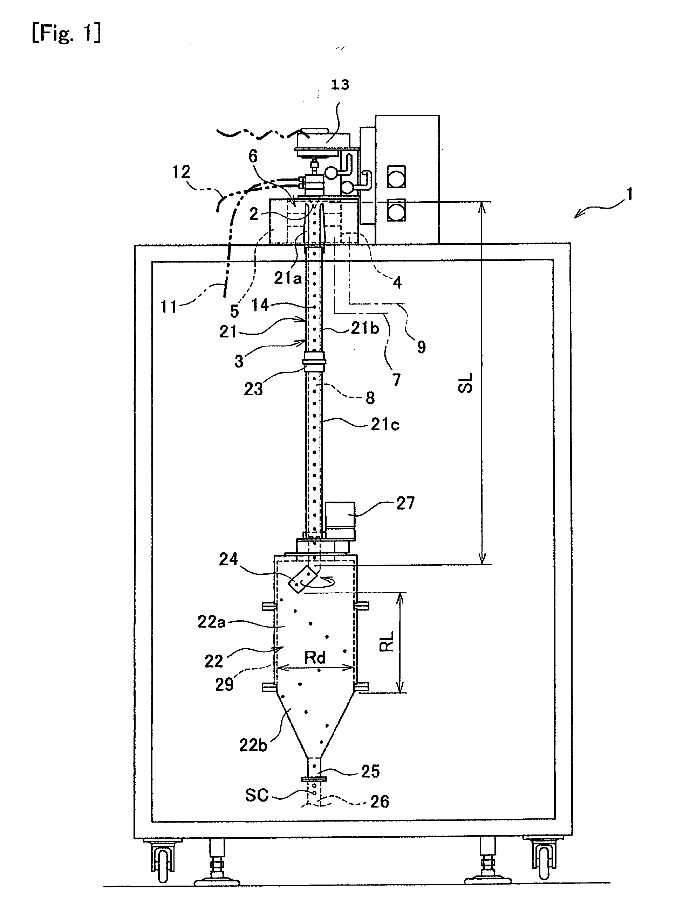

FIG. 2 is an explanatory view illustrating a configuration of the rotary elbow section 24. As illustrated in FIG. 2, the rotary elbow section 24 is connected to a lower end portion of the extension tube 21c and is disposed inside the rotary forming tube 22. The rotary elbow section 24 is configured to be rotatable with respect to the extension tube 21c. The rotary elbow section 24 is driven into rotation by a motor 27. The rotary elbow section 24 and motor 27 are connected to each other through a deceleration mechanism 28. With rotation of the motor 27, the rotary elbow section 24 rotates in a horizontal direction in the rotary forming tube 22. In the seamless capsule manufacturing device 1, a bent angle Ea (angle formed between a center line O of the extension tube 21c and a lower end line of the rotary elbow section 24) of the rotary elbow section 24 is obtuse (e.g., 120° to 160°, preferably, 120° to 135°). A ratio Sd/Ed between an inner diameter Sd of the straight forming tube 21 and an inner diameter Ed of the outlet of the rotary elbow section 24 is 0.8 to 1.2 (preferably 0.9 to 1.0). The rotary elbow section 24 is driven into rotation at a rotating speed of 5 rpm to 50 rpm (preferably, 29 rpm to 40 rpm).

The rotary forming tube 22 is constituted by a cylindrical portion 22a and a tapered portion 22b. The cylindrical portion 22a constitutes an upper part of the rotary forming tube 22 and has a fixed inner diameter. The tapered portion 22b is provided below the cylindrical portion 22a. A ratio Sd/Rd between an inner diameter Rd of the cylindrical portion 22a whose inner diameter is reduced along its axial direction (vertical direction) and inner diameter Sd of the straight forming tube 21 is 4.0 to 10.0 (preferably 5.0 to 8.0). A ratio RL/Rd between a length RL between the lower end of the rotary elbow section 24 and upper end of the tapered portion 22b and an inner diameter Rd of the cylindrical portion 22a is 1.0 to 2.5 (preferably, 1.2 to 1.8). The motor 27 is provided on an upper surface of the cylindrical portion 22a. The rotary elbow section 24 is provided at an upper portion inside the cylindrical portion 22a. A lower end of the tapered portion 22b serves as a coolant discharge port 25. The coolant 8 that flows in from the above-described coolant inflow portion 6 is discharged from the coolant discharge port 25 and is then returned to a not illustrated coolant tank through a coolant discharge tube 26.

In the thus configured seamless capsule manufacturing device 1, the spherical seamless capsule SC is manufactured as follows. First, the core liquid and coating liquid are supplied from the core liquid tank and coating liquid tank, respectively. The core liquid and coating liquid are subjected to vibration through a membrane (not illustrated) vibrated by the vibrator 13 and discharged in the coolant 8 from the nozzle 2 as the multilayer liquid droplets 14. The liquid droplets 14 fall in the straight forming tube 21. In the seamless capsule manufacturing device 1, the length SL of the straight part of the capsule forming tube 3 is 800 mm to 2,000 mm. Thus, the liquid droplets 14 gently fall in the coolant 8 at a portion corresponding to the length SL and are gelled. The liquid droplets 14 that have been gelled to some extent in the straight forming tube 21 flow in the rotary elbow section 24.

The rotary elbow section 24 is bent at an obtuse angle (120° to 160°). Further, a difference in inner diameter between the straight part of the extension tube 21c and rotary elbow section 24 is small (Sd/Ed = 0.8 to 1.2: inner diameter difference is equal to or less then 20% with Ed as a reference). Thus, the liquid droplets 14 reaching the rotary elbow section 24 are changed in moving direction gently and with a small speed change. Then, the liquid droplets 14 are gently discharged from the slowly rotating (5 rpm to 50 rpm) rotary elbow section 24 into the cylindrical portion 22a of the rotary forming tube 22.

The liquid droplets 14 released into the rotary forming tube 22 fall to a peripheral region (near a peripheral wall 29) of the cylindrical portion 22a at which a flow rate is lower than a center portion of the cylindrical portion 22a and fall straight down in the rotary forming tube 22 slowly and gently. A peripheral velocity component caused by rotation of the rotary elbow section 24 slightly acts on each of the liquid droplets 14. However, since the rotating speed and speed difference are suppressed in this manufacturing device 1, influence of the velocity component on each of the liquid droplets 14 is very small, and the liquid droplets 14 fall substantially straight down from a leading end of the rotary elbow section 24. As a result, the liquid droplets 14 fall slowly in the peripheral region of the rotary forming tube 22 while being scattered in a peripheral direction and are gelled. The liquid droplets 14 falling in the cylindrical portion 22a are then cooled and cured and reach the tapered portion 22b. Then, while increasing the flow rate, the liquid droplets 14 are discharged from the coolant discharge port 25 and collected as the spherical seamless capsules SC.

As described above, in the seamless capsule manufacturing method and seamless capsule manufacturing device according to the present invention, the liquid droplets 14 are cured to some extent in the straight tubular shaped straight forming tube 21. Thereafter, the liquid droplets 14 are scattered radially in the large-diameter rotary forming tube 22 by the rotary elbow section 24 and made to fall slowly in the rotary forming tube 22. That is, the liquid droplets 14 are gelled to some extent in the straight forming tube 21 and discharged in this state into the rotary forming tube 22. The liquid droplets 14 are discharged into the rotary forming tube 22 in a state being scattered in the peripheral direction and then fall slowly in the vertical direction in the coolant 8 to be cured.

In the manufacturing method and manufacturing device according to the present invention, it is possible to allow the liquid droplets 14 to be cooled and cured in a gentle manner without using a long forming tube or making the liquid droplets fall in a spiral manner immediately after the discharge and thereby to manufacture the seamless capsule while suppressing occurrence of deformation, uneven thickness, or rapture of the capsule. Further, in the manufacturing device according to the present invention, the liquid droplets 14 are made to fall while being scattered radially in the rotary forming tube 22, thereby preventing adhesion and cohesion between the liquid droplets. Thus, according to the present invention, it is possible to effectively obtain a high quality seamless capsule without causing an increase in the device size.

The present invention is not limited to the above-described embodiment but may be variously modified without departing from the spirit of the invention.

For example, the above-described numerical values are just illustrative and may be appropriately changed. Further, although the double nozzle is used in the above embodiment, the nozzle for liquid droplet discharge is not limited to the double nozzle, but may have a multiple structure more than triplicate. As a matter of course, in place of the multiple nozzle, a single layer nozzle that sprays a single layer liquid droplet may be used. Further, the vibration system required for generation of the multilayer liquid droplets includes various types. Further, inner and outer layer components of the multilayer liquid droplet of the seamless capsule are arbitrary. In addition, as a structure of the curing liquid supply tube, other structures than that of the above embodiment may be appropriately adopted.

### Reference Signs List

- 1:: Seamless capsule
- 2:: Multiple nozzle (nozzle)
- 3:: Capsule forming tube
- 4:: Coolant supply tube
- 5:: Overflow tube
- 6:: Coolant inflow portion
- 7:: Tube line
- 8:: Coolant (curing liquid)
- 9:: Return tube
- 11:: Core liquid supply tube
- 12:: Coating liquid supply tube
- 13:: Vibrator
- 14:: Multilayer liquid droplet
- 21:: Straight forming tube (first forming tube)
- 21a:: Introduction tube
- 21b:: Extension tube
- 21c:: Extension tube
- 22:: Rotary forming tube (second forming tube)
- 22a:: Cylindrical portion
- 22b:: Tapered portion
- 23:: Connection portion
- 24:: Rotary elbow section (rotary discharge device)
- 25:: Coolant discharge port
- 26:: Coolant discharge tube
- 27:: Motor
- 28:: Deceleration mechanism
- 29:: Peripheral wall
- SC:: Seamless capsule
- O:: Center line of turning tube
- Ea:: Bent angle of rotary elbow section
- Ed:: Inner diameter of rotary elbow section outlet
- Rd:: Inner diameter of cylindrical portion of rotary forming tube
- Sd:: Inner diameter of straight forming tube
- RL:: Length between lower end of rotary elbow section and upper end of tapered portion of rotary forming tube
- SL:: Length of straight part of straight forming tube

## Claims

1. A seamless capsule manufacturing method that manufactures a seamless capsule by discharging a liquid droplet from a nozzle into curing liquid to cause at least a surface portion of each of the liquid droplets to be cured, **characterized by** comprising:
discharging the liquid droplets in a straight tubular shaped first forming tube disposed below the nozzle and extending in a vertical direction to make the liquid droplets fall in the curing liquid in the first forming tube for cooling;
discharging the liquid droplets from a rotary discharge device rotatably connected to a lower end of the capsule forming tube, while rotating the rotary discharge device, into a second forming tube having a diameter larger than that of the capsule forming tube; and
making the liquid droplets fall in the curing liquid in the second forming tube in the vertical direction while scattering the liquid droplets in a peripheral direction.

2. The seamless capsule manufacturing method according to claim 1, **characterized in that**
the rotary discharge device is provided so as to be bent such that a bent angle Ea thereof with respect to the first forming tube is obtuse, and
the liquid droplets are discharged near a peripheral wall of the second forming tube from a leading end of the rotary discharge device.

3. The seamless capsule manufacturing method according to claim 2, **characterized in that**
the bent angle Ea is in a range of 120° to 160°.

4. The seamless capsule manufacturing method according to any one of claims 1 to 3, **characterized in that**
a ratio (Sd/Ed) between an inner diameter Sd of the first forming tube and an inner diameter Ed of the outlet of the rotary discharge device is 0.8 to 1.2, and
the liquid droplets are discharged from the rotary discharge device at substantially the same speed as a falling speed of the liquid droplets in the first forming tube.

5. The seamless capsule manufacturing method according to any one of claims 1 to 4, **characterized in that**
the rotary discharge device is driven into rotation at a rotating speed of 5 rpm to 50 rpm, and
the liquid droplets are discharged straight down from the rotary discharge device and then fall in the vertical direction.

6. A seamless capsule manufacturing device that manufactures a seamless capsule by discharging a liquid droplet from a nozzle into curing liquid to cause at least a surface portion of each of the liquid droplets to be cured, **characterized by** comprising:
a straight tubular shaped first forming tube disposed below the nozzle to receive the discharged liquid droplets;
a rotary discharge device rotatably connected to a lower end of the first forming tube; and
a second forming tube disposed below the first forming tube and having a diameter larger than that of the first forming tube, into which the liquid droplets are discharged from the rotary discharge device, wherein
the liquid droplets cooled in the first forming tube are discharged into the second forming tube through the rotary discharge device rotated and then fall in a vertical direction in the curing liquid in the second forming tube while being scattering in a peripheral direction.

7. The seamless capsule manufacturing device according to claim 6, **characterized in that**
a ratio Rd/Sd between an inner diameter Sd of the first forming tube and an inner diameter Rd of the second forming tube is 4.0 to 10.0.

8. The seamless capsule manufacturing device according to claim 6 or 7, **characterized in that**
the second forming tube includes a cylindrical portion having a fixed inner diameter and a tapered portion provided below the cylindrical portion and reduced in inner diameter along its axial direction, and
a ratio RL/Rd between a length RL between the lower end of the rotary discharge device and upper end of the tapered portion and inner diameter Rd of the cylindrical portion is 1.0 to 2.5.

9. The seamless capsule manufacturing device according to any one of claims 6 to 8, **characterized in that**
the bent angle Ea is 120° to 160°.

10. The seamless capsule manufacturing device according to any one of claims 6 to 9, **characterized in that**
a length SL of a straight part of the first forming tube is 800 mm to 2,000 mm.

11. The seamless capsule manufacturing device according to any one of claims 6 to 9, **characterized in that**
a ratio (Sd/Ed) between an inner diameter Sd of the first forming tube and an inner diameter Ed of the outlet of the rotary discharge device is 0.8 to 1.2.
